# EUROPEAN PATENT APPLICATION

(11) **EP 1 871 085 A1**
(43) Date of publication of application: **26.12.2007**
(21) Application number: 06380179.9
(22) Date of filing: 22.06.2006
(51) Int. Cl.: H04N 1/00, G06K 13/067

(54) **High speed system based on image capture, for automatic information extraction from documents with an even or variable thickness**

(71) Applicant: Management Augusto, S.L, 50008 Zaragoza (ES)
(72) Inventor: Marturel Falcon, Francisco Javier, 50009 Zaragoza (ES)
(74) Representative: Isern-Jara, Nuria

(57) **Abstract**

A high speed image capture system, for the automatic treatment of documents that has the resources in order to process documents with varying sizes and uneven thicknesses, regardless of the fact that said documents are creased, have stickers or similar items attached, and/or inclined against the longitudinal axis of the conveyor belt, with support for different paper qualities, being applicable to documents carrying any type of bar code, be they uni-dimensional or bi-dimensional, or with optically recognisable characters.

## Description

### OBJECT OF THE INVENTION

The invention refers to a high speed system based on image capture, for automatic information extraction from documents with an even or variable thickness.

Said information can be of differing types and in each case the appropriate computerised treatment can be carried out.

The system places special focus on applications for the massive treatment of documentation in so far as refers to the amount of material to be processed and whose support is not even in its thickness, for example, medical prescriptions. There may be several million prescriptions to be processed in a few days, which may have the medicine cardboard carton codes stuck to them, and in some cases a user information leaflet, all of which makes the thickness of the document uneven. The system that concerns us would allow all of this to be dealt with at high speed for the purpose of making the process of selection, sorting, extraction and grouping of information easier by blocks of said documents.

In the handling system to which the invention refers a dispensing of the documents takes place in addition to the image capture, marking and packaging.

Said system can be configured to handle different sized documents, from business cards up to DIN A3 sized documents, even though the documents do not have an even thickness, are creased, have stickers or similar items attached, etc.

### BACKGROUND TO THE INVENTION

The difficulties that there may be in some cases of the computerised handling of documents are well known where there is a wide variety of documents of differing formats to be handled. In some cases, this treatment turns out to be impossible. Think about the problem that arises if one has to work with large amounts of documents, more or less creased, of different thicknesses, where papers of different gram weights may be mixed together or equally where these may be as a result of having stickers attached or other elements, which give rise to certain areas having different thicknesses.

Up to the present time, said types of documents where the size, shape and other characteristics are completely uneven, it is not possible to carry out a treatment of same in a completely automated manner at high speed and with security.

In the case of the example quoted of medical prescriptions, these have two lineal bar codes (CODE39, EAN13) and a bi-dimensional bar code (PDF). The codes contain information relative to a medicine, a prescription block and a patient. The prescriptions are grouped together by the Pharmaceutical Societies and in turn by pharmacies. From all of this information, as an example, the information to be obtained is the different invoices that National Health Service must pay to each pharmacy. In these moments said treatment is carried out in such a way that it requires the help of operators, and this carries with it a low efficiency and an increase in mistakes during its working.

The applicant is aware of document US 5.926.392, which describes a document processing machine, which scans, detects the orientation and rectifies it if it is incorrect. However, it is not capable of handling documents with uneven thicknesses over the length and breadth of the surface.

### DESCRIPTION OF THE INVENTION

The present invention has been developed for the purpose of providing a high speed system based on image capture, for automatic information extraction from documents with an even or variable thickness that solves the previously stated disadvantages, moreover, providing other advantages that will be clear from the description which is attached below.

The system that is recommended allows the processing or handling of the previously referred to document types, being based on a plurality of associated means functionally connected to each other if the complete handling of the documents is carried out, whatever the size, shape and quality is, from the input area to the output area.

In this sense, the invention system includes:
- A means of receiving the documents from the input area;
- A means of stacking of said documents;
- A means of feeding the individual documents from the stacking area, being able to carry out said feed by means of suction or friction techniques. These means will allow for adjustments to be carried out depending on the thickness of the document to be processed;
- A means of transporting the individual documents by a suction belt;
- A means of detection when there are changes of the paper type, in order to effect controls when there is paper added of different colours or textures. This is made from a chromatic photoelectric cell. It is used, for example, to separate the documentation listed at the end of one pharmacy and the beginning of another, so that the installation does not stop operating;
- A means of total or partial image capture of the document in movement, in line with the information contained in the document that is going to be processed;
- A suitable means of illumination, as it requires high luminosity and cold light, in accordance with the image capture devices referred to in the previous point;
- A means of detecting any type of bar code that may appear on the document;
- A means of optical character recognition;
- A means of document counting;
- A means of detecting multiple papers, in order to control the case in which the feed area has two or more documents superimposed;
- Contact free document marking means, for the purpose of marking, for example, documents that give a signal of multiple feeding, or equally mark or date the documents in accordance with them having been read, or other similar needs;
- A means of detecting the passage of the paper and of the document position;
- A means for the removal of the documents once the image has been captured, carrying out the transport on a belt, finalising at that moment the transport by suction;
- A means to stack the documents in groups;
- A means to staple the documents in each group;
- A means of extraction or removal at the end of the processed documents; and
- A control means for all of the previously stated devices.

The object of this invention is to provide a system that has the following characteristics:
- It allows the document feeding speed to be regulated.
- It allows a control of the speed of the document feeding transport means in order to regulate the spacing between documents depending on their size, in such a way that same can be detected when capturing the image.
- The delivery of the documents to the feeding area can be made by either suction or friction.
- The paper passage detectors are combined with a system that determines the image capture moment, in line with the system speed.
- The image capture capacity is high speed. For example, in the case of medical prescription type documents (120 x 210 mm) up to eleven documents can be captured per second (approximately 40,000 per hour) of this type, at a resolution of 300 pixels per inch, recognising the information coded by means of the lineal and bi-dimensional bar codes stored in the same in real time. The final resolution is related to the belt advance speed, increased resolution being possible by lowering the speed and vice versa.
- The capture camera can read lines or areas and can generate complete images, or images that contain the parts of interest on the document.
- The means of illumination are made up of a special and cold light for the appropriate image capture.
- There are three independent systems of control connected to each other: a first system for image control, a second one for control the system itself and a third one for marking control.
- The system is synchronised, in such a way that it can recognise the working speed and send the value to all the devices that require this information.
- The system allows the stacking belt speed to be determined automatically in line with the document extraction belt speed.

Even though the invention system has been shown using the example for the application in the handling or processing of medical prescriptions, its application can be extended to any other application that requires high speed information extraction by means of document image capture, or simply the scanning of a document for digital storage.

Other characteristics and advantages of the system object of the present invention will be come clear from the present description of a preferred embodiment, but it is not exclusive, illustrated by way of example, but the drawings attached are not by way of limitation.

### BRIEF DESCRIPTION OF THE DRAWINGS

Figure 1 shows a block diagram corresponding to the different devices functionally connected to each other that make up the system of the present invention;
Figure 2 shows a side elevation view of the transported belt in which the hooks can be seen that delimit the stations into which the belt advance is divided;
Figure 3 shows a detailed view of a hook that delimits the stations into which the belt advance is divided;
Figure 4 is a view of the assembly of the turning device assembled with the stapler belt; and
Figure 5 represents an elevation view of the document turning part.

### DESCRIPTION OF THE PREFERRED EMBODIMENT

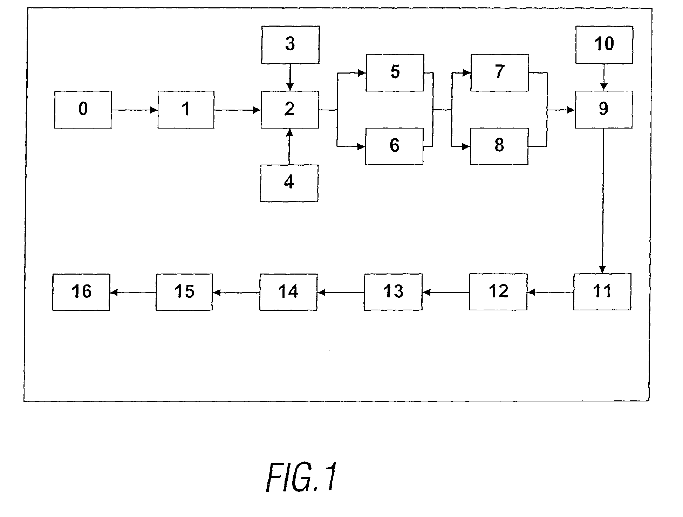

In the block diagram corresponding to figure 1, a first Block 0 can be seen that corresponds to the *In Tray* or document input, onto which these are placed so that Block 1 or the Feeder can proceed to the separation by means of a friction and/or suction device. This Block 1 allows automatic adjustments to be made depending on the thickness of the document to be processed, in such a way that it allows documents of varying thicknesses to be processed without interrupting the process. The feeder always leaves a space between documents that is used to allow the paper to be detected by Block 8, which will be explained later.

The feeder works by friction, as this method has shown itself to be the most efficient compared to the alternative of suction feeding for the feeding of documents of uneven thicknesses. Because of this, in order to allow the movement of documents with varying thicknesses and with labels attached, the material of the components that typically make up the separation is substituted, this is normally silicone and is replaced by other softer materials but with the same drag qualities, in this case nitryl. While silicone has a typical hardness of 100 on the Shore scale, nitryl reaches 70 on the same scale. The bobbin has an average diameter of 65 mm and its section is 3 mm in diameter, but these dimensions are not by way of limitation.

Likewise the feeder is provided with some side guides that are used so that the document does not slope or lift too much as it goes through the feeder, and with a metal sheet that prevents the documents from going under the feeder, or between the feeder and the drag device.

Block 1 delivers the separated documents to Block 2 or the *Conveyor* that is used to transport them by means of suction belts to avoid the documents losing contact with the belt. Since the commercial conveyors typically have a central single belt, this block in the invention being dealt with has two lateral and one central suction conveyor belts. Said triple suction system is installed to force the document to stick to the belt at the moment of the image capture in such a way that it does not come out distorted or with shadows.

In a preferred embodiment, the feeder is fitted with a metallic sheet that prevents the documents introduced from accidentally going under the feeder, or between the feeder and the drag device.

Block 3 is connected to Block 2 that is an *encoder* that converts the belt advance into electrical pulses, in such a way that allows the document to be traced throughout its journey. Also connected to Block 2 is Block 4 which is *a Frequency Potentiometer* that keeps the Conveyor (Block 2) advance speed constant. This is important, both to maintain maximum productivity and equally to prevent errors being generated in the images, as a greater speed than that which is suitable could cause line loss in the Image Capture (Block 9), and a lower speed than desirable could have an effect on image luminosity.

After the document passes along the *Conveyor* (Block 2) it reaches Block 5, corresponding to the *Change of job* detector device. It is possible to add a characteristic coloured paper in Block 1 that allows the end of one job and the start of the next to be marked. Thanks to Block 5 it is possible to avoid stopping the system as it automatically detects the changes of jobs. In the same way as Block 5 is connected, there is Block 6 or *the Document Counter* that is in charge of counting all the documents that pass through for the purpose of being able to separate same into batches of X documents (where X can be set as a parameter). This sensor, which is made up of a photocell, is also used for purposes of traceability.

Next there is Block 7 that corresponds to the *Multiple Feeding* detector device, by means of which it is possible to control in which document the multiple feed has occurred. It has an ultrasound transmitter and receiver capable of detecting the air chamber that is created between two or more documents.

Approximately in the same place is Block 8 or the *Capture Trigger,* which is in charge of detecting the passage of the paper, the document position and in addition determine the start and finish of the image capture. In order to do this there is an electronic system that takes the belt speed, the position of the blocks and the distance to the read zone into account as well as the document dimensions (Block 9).

In regard to Block 9, that is called the *Image Capturer,* this is in charge of the image capture itself.

This image can be:
- All the document
- All the document in a sequential manner by sections
- Part of the document

Any information of the following type can be extracted from this:
- Any type of bar code, either lineal or bi-dimensional
- Optical character recognition
- Any other information such as marks or colours that can be deduced from a document image.

The image capture is formed by an industrial line digital camera. Due to the document pass speed (the belt advances a 2 m/s) and the capture is carried out without stopping the document, a lineal camera is used so that the image from same is formed from the X lines that have been captured. Hence, an image is obtained with a vertical resolution of X pixels and a horizontal resolution equal to the number of pixels of the sensor. In our case, this number is 4096.

Block 10 is connected to Block 9, corresponding to the *Illumination* device. This illumination has to be lineal, and adapted to the document speed. 'Cold' light is used, this means, illumination by means of a fibre optic. This light cannot have any type of blinking frequency owing to the high capture speed. Therefore, it cannot come from a fluorescent tube (not even high frequency), nor from a discharge lamp.

Next to Block 9, corresponding to the image capture device, is an alternative and optional Block 11 that is the *Bar code reader and the bi-dimensional code reader* device using a laser reader. This module is not necessary for the decoding of certain codes or marks or OCR, as these operations are carried out by means of image, this block being a redundant system.

Subsequently, and once the extraction of an image has been made, some codes, and the counter signals, multiple feeding and other signals have been detected, the system provides an exclusive marking signal for each document. This operation is carried out by Block 12, formed by a *Document Marker.* In this way a document traceability system is formed. This marking system is carried out without contact due to the high document pass rate and being aware of the wear and tear that any contact marking system would mean. This Block 12 is fitted with a photo-cell, and is in charge of determining the moment at which the printing is made by means of an electronic system that takes the high belt speed, the position of the blocks and the distance to the marking head into account. The marking is carried out by means of ink jet or laser printing, for example.

Subsequently, there is Block 13, the *Extraction and Stacking,* that is in charge of ensuring that the documents are square and positioned so that the drag devices shown by Block 14 or the *Batch Separator* can carry out the document separation into batches of X documents (see Block 6) and by type of job (see Block 5).

By use of this element, the collection or stacking of the documents is achieved at the exit by means of dragging from the document stacker by groups.

For the document removal and dragging once captured two types of device are fitted, which are assembled in an interchangeable manner in line with the document type being processed.

In a first preferred embodiment, not shown, the removal and dragging is carried out by means of springs or metallic straps that brake the document at the exit from the conveyor belt, and due to the inertia and their own weight are deposited onto the stacking device.

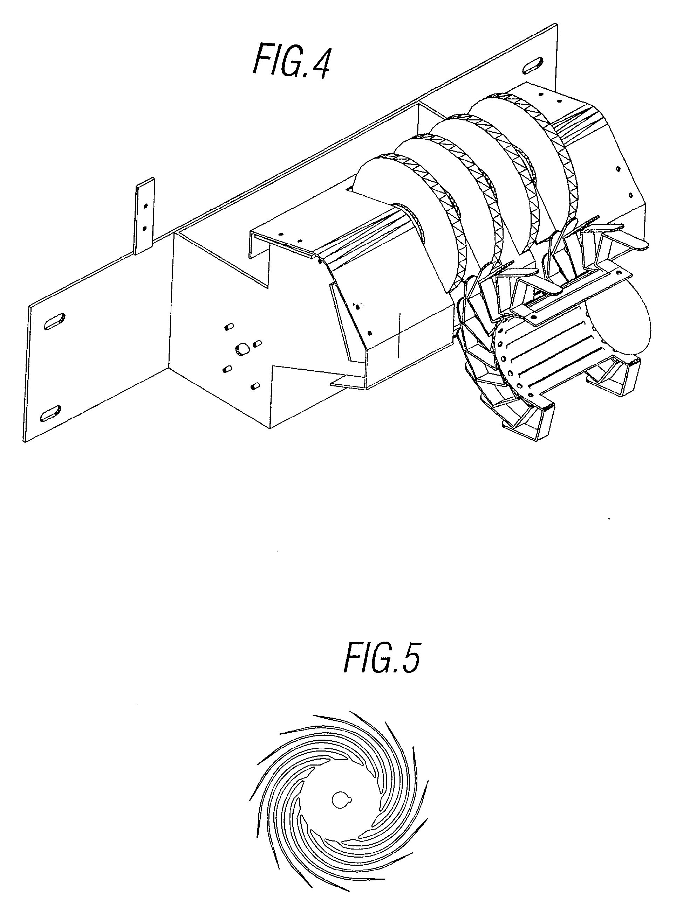

As and how shown in figure 4, in a second embodiment a document turning device (17) is used that has an axle onto which four vanes are fitted (18) (of the type shown in figure 5) that turn continuously, in such a way that when a document arrives on these, it is introduced into one of the gaps in these vanes and is turned over and deposited on the stacker device. In figure 4 the vanes have been shown in an outline manner.

The two previously stated turning devices are interchangeable using a simple assembly and dismantling process.

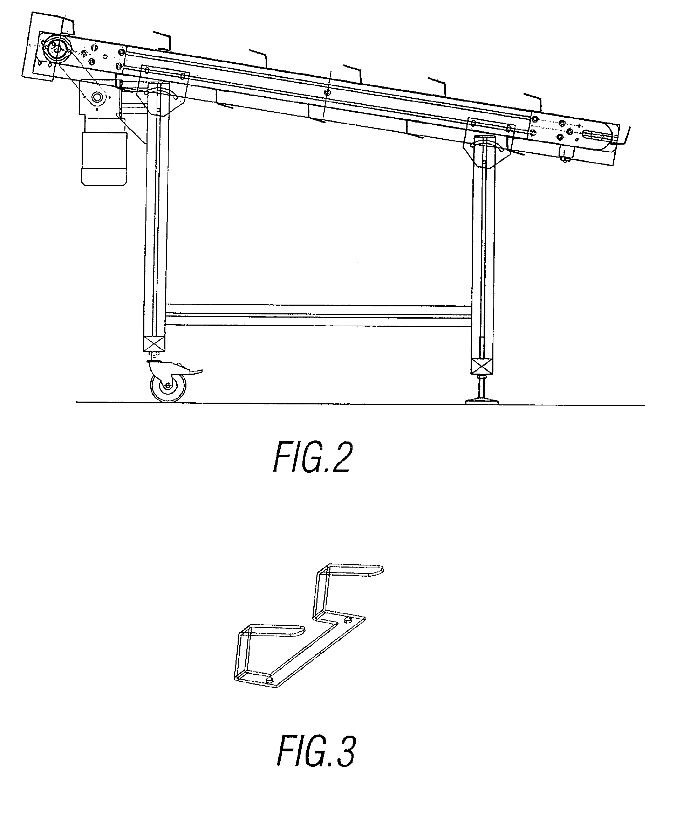

As and how shown in figure 2, for the document stacking in groups there is a conveyor belt (20) that is modified in such a way that the belt is divided into thirteen 'stations', made up with a plurality of hooks (19), that can be appreciated in detail in figure 3, in such a way that when the belt advances, these hooks (19) drag the documents towards the next station. The stopping of the advance is automatic, and is carried out when the hook (19) passes by a phototransistor.

Next, there is Block 15 made up of *Stapling* devices, where the stapling of the stacked documents is carried out. This action is optional; it can be programmed to be carried out or not. The stapling sensor can be a mechanical press button activated by the paper itself as it enters in the stapling block, or equally by a photocell.

At the end of the process there is Block 16 of *Final Station* or document removal and exit from the system.

Next, we shall go on to describe the electronic control of the system described previously following the block diagram shown in figure 1.
Block 0 - Receiver Tray
Manual operation
Block 1 - Feeder
Actuators
Stop-start switches for the feeder (fitted in Y logic series)
Rotary speed control
Block 6: Document Counter
Block 5: Job change detector
Block 14: Batch separator
Computer controlled switch
Emergency stop

### Logic:

The feeder works when then start-stop switches are in the start position. The feeder stops when one of the switches is in the stop position or the computer sends a stop signal. When the document counter (Block 6) reaches the pre-established value, or equally the job change detector (Block 5) gives a signal, the feeder stops for X time units, equivalent to the time it takes the drag device (Block 14) to advance to the following position (X is a programmable parameter in units of one hundredth of a second). In this way we can be sure that the different batches and jobs are physically separated.

The feeder stops when the conveyor (Block 3) stops or when the emergency stop is located.

By using the rotary speed control the separation between documents can be varied. This speed is regulated in such a way that it cannot be greater than the subsequent conveyor belt (Block 3) speed, to prevent a document jam from occurring.
Block 2 - Conveyor Device
Actuators
Stop-start switch
Emergency stop switch
Block 4: Potentiometer frequency meter

### Logic:

The conveyor works when then start-stop switch is in the start position and stops when the switch is in the stop position or the emergency stop switch is located. This conveyor belt advance speed is regulated by Block 4 using a potentiometer frequency meter.

### Block 3 - Encoder

It is a sensor that converts the belt advance by electrical impulses. In this way we are aware of the advance speed and the document position at any given moment, likewise convert distances in quantities of electrical impulses.

It is connected to one of the belt axles, in such a way that each turn of this corresponds to X electrical impulses.
Block 4 - Potentiometer frequency meter
Actuators:
Block 3: encoder
Block 2: Conveyor mechanism

### Logic:

This piece of equipment reads the pulses that reach Block 3 (Encoder) by means of a frequency meter and it compares it with a value that has been introduced into the memory. In the event of both not being equal, it acts as a potentiometer, adjusting the output signal in such a way as to adapt it to the speed of Block 2 (conveyor belt), until both values coincide.

The conveyor belt speed (Block 2) has to remain constant, as a change of same would mean having to adjust the diaphragm opening of the image capturer (Block 9) again so that all the images had appropriate characteristics of focus and illumination.

### Block 5 - Job Change Detector (chromatic photocell)

It is made up with a sensor that is activated when a separator document passes that has an exclusive colour, that is different from the rest of the documents.

### Block 6 - Document counter (photocell)

It is a sensor that gives a signal when each document passes under it. It is connected to a counter in such a way that when it reaches a pre-established value (programmable parameter), it activates the exit signal.

### Block 7 - Multiple Feeding detector (Ultrasound transmitter and receiver)

This is a sensor that activates a signal when it detects that there is more than one document under it (one on top of another). This signal is connected to the document image by means of the follow up of same via the Encoder (Block 3).
Block 8 - Capture Trigger
Actuators:
Right photocell
Left photocell

### Logic:

To prevent the possible inclination of the documents arriving causing the image to be incomplete, two photocells are used, in such a way that the acquisition signal is activated when one of the two is activated, and deactivates when the two are off. Hence, this deals with '0' Logic.

### Block 9 - Image capturer

The image capturer works capturing image lines of X pixels (depending on the transversal quality required and the document size), and forms the image from X transversal lines that we want the longitudinal image resolution to have.
Actuators:
Block 8: Capture Trigger
Block 3: Encoder

### Logic:

When the Capture trigger (Block 8) is activated, X encoder pulses are counted (Block 3) corresponding to the distance that there is from same to the image taking line, at that moment the image capturer is instructed to open another image and take the first line. After that every Y encoder pulses (Block 3) it will take a new line, which will then make up the image. When the Capturer Trigger (Block 8) is deactivated, it waits X encoder pulses (Block 3), corresponding to the distance there is between that block up to the image taking line, then sending a signal to the capturer so that it stops taking lines and closes the current image.

The image Capturer (Block 9) automatically rejects the job separator document images in the following way:

When it detects one of the documents by means of the Job Change Sensor (Block 5), it memorises the document counter value (Block 6) in such a way that when the counter connected to the Capturer trigger (Block 8) reaches that value, it does not send a signal to the image capturer (Block 9).

### Block 10 - Illumination

The illumination of the acquisition line is carried out by means of a double lineal fibre optic illumination source with each one being fitted with a beam concentrator lens, in such a way that the light has an effect on the line from two opposing angles, avoiding shadow and bright faults.
Block 11 - Bar code reader
Actuators:
Block 8: Capturer trigger
Block 3: encoder

### Logic:

When the capturer trigger (Block 8) is activated it counts X encoder pulses (Block 3), corresponding to the distance that there is between that block to the laser reader position. At that moment it sends a signal to the reader so that it is activated. The reader is deactivated when it has read the code or when it is sent another signal from Block 8.

### Block 12 - Document marker

This block carries out the marking of the documents without making contact with these. It prints the same numbering on each document as was assigned to each image.
Actuators:
Detector photocell
Block 3: encoder
Computer series port (and/or parallel)

### Logic:

When the photocell is activated it counts X encoder pulses (Block 4), corresponding to the distance between the sensor and the marker head (also taking the distance from the document edge into account where the beginning of the marking is required). At that moment the head prints the message that is received from the COMPUTER via a series port (and/or parallel). The head uses the encoder signal (Block 3) to calculate the document pass speed and to print correctly, without distortions.

### Block 13 - Removal and Stacking

Depending on the type of document, this operation can be mechanical or automatic. In both cases the block is always operative, except when the machine is completely shut down or the emergency stop is used.

### Block 14 - Batch Separator

This is in charge of separating some batches from others and types of job from others, by means of the belt advance that is divided into stations.
Actuators:
Block 6: Document Counter
Block 5: Job change detector
Block 3: encoder

### Logic:

When the document counter (Block 6) reaches the pre-established value, or the job change detector (Block 5) gives a signal, at that moment it counts X encoder pulses (Block 3), corresponding to the distance that there is between Block 5 or Block 6 (that are at the same height) until the document completely leaves the conveyor (Block 2) and falls onto the stacker (Block 13). At that moment the advance signal is sent in such a way that it advances only one station, the batches or the different jobs being physically separated. By station we understand each one of the sections into which the conveyor belt advance is divided.

### Block 15 - Stapling

The stapling is automatic and has its own product sensor, in such a way that when it detects that a packet has been introduced it carries out a stapling cycle once until the sensor is activated again.
Block 16 - Final Station
Manual operation

### Electronic control board

The electronic control board carries out and manages all the above-mentioned functions and is basically composed of a re-writable PIC (programmable integrated circuit), which is in charge of the majority of the system's logic processes.

The board is in constant contact with the computer via a serial port. This communication is used for the interchange of signals between them, in such a way that it is possible to change the parameters of the board from the computer, and from this send signals to the computer, such as those from the photocells, the job change detector, document counter, multiple feeding detector, etc.

Likewise, the board has an RJ11 connector by means of which the PIC (programmable integrated circuit) programme can be accessed through a programmer for the control of the process.

The different blocks are placed spatially in the Block Diagram in accordance with the system's working sequence. However, it seems to be necessary to make the following comments:
Blocks 5 and 6 correspond to the *Job Change Detector* and the *Document Counter* must be the same distance and very close to Block 1 Feeder, as they must stop this no more than it is activated, and not let any other document pass until the feeder is started up again.
Blocks 7 and 8, corresponding to the *Multiple Feeding* Detector and to the *Capturer Trigger,* must be very close to Block 9 of the *Image Capturer,* in such a way that the multiple feeding signal can be connected to each image (in the event of this signal being activated), and so that no images are lost. This is achieved thanks to the fact that the distance between the trigger and the capturer is less than the distance between two successive documents.

Once the blocks have been distributed spatially, any change in their location will have to be studied in such a way that it does not affect the working. With this purposes in mind it has been arranged that all the values for the distances and times can have the parameters set.

## Claims

1. A high speed image capture system, for the automatic treatment of documents that includes:
- A means of deliver or receiving the documents for same;
- A means of stacking of said documents;
- A means of individual feeding for the previously documents stacked;
- A means of individual dragging or transporting the documents;
- A means of counting the documents;
- A means of detection when there are changes of the documents;
- A means of detecting multiple feeding, this being, the superimposing of two or more documents;
- A means of document marking;
- A means of detecting the passage of paper and the document position;
- A means of image capture of moving documents in relation with means of illumination;
- A means of detecting bar codes by laser (optional);
- A means of optical character recognition;
- A means of removal and dragging of the documents once the image has been captured;
- A means of turning the documents over;
- A means of stacking the documents in groups;
- A means of stapling the documents in each group;
- A means of final extraction of the documents; and
- A control mechanism for all of the previously stated devices,
is **characterised** because it has the resources in order to process documents with varying sizes and uneven thicknesses, regardless of the fact that said documents are creased, have stickers or similar items attached, and/or inclined against the longitudinal axis of the conveyor belt, with support for different paper qualities, being applicable to documents carrying any type of bar code, be they uni-dimensional or bi-dimensional, or with optically recognisable characters.

2. A high speed image capture system according to claim 1, **characterised in that** it has the means to regulate the document feeding speed.

3. A high speed image capture system according to claim 1, **characterised in that** feeding is carried out at regular intervals to determine the space between documents allowing same to be detected at the moment of the image capture.

4. A high speed image capture system according to claim 1, **characterised in that** the multiple feeding detectors have an ultrasound receiver and a transmitter that detects the air chamber that is formed between two or more documents.

5. A high speed image capture system according to claim 1, **characterised in that** the document marker devices carry out the said marking without making contact.

6. A high speed image capture system according to claim 5, **characterised in that** the contact free document marker devices ink jet printing means.

7. A high speed image capture system according to claim 5, **characterised in that** the contact free document marker devices comprise laser printing means.

8. A high speed image capture system according to claim 1, **characterised in that** previously stacked document unitary feeding devices comprise a friction feeder.

9. A high speed image capture system according to claim 1, **characterised in that** previously stacked document unitary feeding devices comprise a suction feeder.

10. A high speed image capture system according to claims 3 or 4, **characterised in that** the feeder device has side guides to guide the documents.

11. A high speed image capture system according to claim 8, **characterised in that** the friction feeder has at least two synthetic rubber elements that carry out the sheet separation.

12. A high speed image capture system, for the automatic treatment of documents, according to claim 11, **characterised in that** the synthetic rubber elements have a bobbin shape.

13. A high speed image capture system according to claim 11, **characterised in that** the synthetic rubber material that makes the sheet separation is nitryl.

14. A high speed image capture system according to claim 1, **characterised in that** the feeder is fitted with a metallic sheet at the bottom.

15. A high speed image capture system according to claim 1, **characterised in that** the means of unitary dragging or transporting the documents is made with a suction conveyor.

16. A high speed image capture system according to claim 15, **characterised in that** the suction conveyor has suction devices both in the centre and equally on the sides compared to the longitudinal axis of the machine.

17. A high speed image capture system according to claim 1, **characterised in that** document change detector means have a chromatic photocell that detects a characteristic coloured paper that marks the end of one job and the start of the next.

18. A high speed image capture system according to claim 1, **characterised in that** the paper passage detector means are combined with electronic devices that allow the moment of the image capture to be detected, in line with the document conveyor belt speed, the position of the blocks, the distance to the reading area and the document dimensions.

19. A high speed image capture system according to claim 1, **characterised in that** it has detecting means to detect the total or partial document image.

20. A high speed image capture system according to claim 19, **characterised in that** the image capture is made in a total manner.

21. A high speed image capture system according to claim 19, **characterised in that** the image capture is made in a sequential manner in sections.

22. A high speed image capture system according to claim 1, **characterised in that** it captures documents having a length of 120 mm at a rate of at least 11 documents per second with a resolution of 300 pixels per inch.

23. A high speed image capture system according to claim 1, **characterised in that** the illumination means in combination with the document image capturers is made up of cold light and with a nil blinking frequency for the appropriate image capture.

24. A high speed image capture system according to claim 23, **characterised in that** the illumination means is made from fibre optics.

25. A high speed image capture system, for the automatic treatment of documents, according to claim 1, **characterised in that** the drag and removal means for the documents located at the back section of the image capture have some metallic straps.

26. A high speed image capture system, for the automatic treatment of documents, according to claim 1, **characterised in that** the means for turning the documents over, once the image has been captured, consists of a document rotating device that continually turns, on which there are at least two vanes with a plurality of radial extensions.

27. A high speed image capture system, for the automatic treatment of documents, according to claim 26, **characterised in that** the radial extensions are made from a mouldable plastic material.

28. A high speed image capture system, for the automatic treatment of documents, according to claim 1, **characterised in that** the document stacking devices consist of a conveyor belt divided into a plurality of stations by means of pivots that drag the documents to the next station as the belt advances.

29. A high speed image capture system, for the automatic treatment of documents, according to claim 1, **characterised in that** the stopping of the stacker conveyor belt advance occurs when the pivot passes a detection device.

30. A high speed image capture system, for the automatic treatment of documents, according to claim 29, **characterised in that** the detector device is a phototransistor.

31. A high speed image capture system according to claim 1, **characterised in that** there are three independent control systems, one of them being for the general system control, the second one for image control, and the third one for the marking control.

32. A high speed image capture system according to claim 31, **characterised in that** the general control system consists of a programmable integrated circuit.

33. A high speed image capture system according to claim 1, **characterised in that** stacker conveyor belt speed is determined in line with the speed of the document extraction conveyor belt.
